# EUROPEAN PATENT APPLICATION

(11) **EP 4 796 513 A1**
(43) Date of publication of application: **26.08.2026**
(21) Application number: 26158272.0
(22) Date of filing: 12.02.2026
(51) Int. Cl.: C04B 35/573, C04B 35/628, C04B 35/80, C04B 35/632, C04B 35/634, C04B 35/636

(54) **FABRICATION OF CERAMIC MATRIX COMPOSITES**

(30) Priority: 13.02.2025 US 202519053332
(71) Applicant: RTX Corporation, Farmington, CT 06032 (US)
(72) Inventor: HEJAZI, Vahid, San Diego, 92129 (US); MASTROBATTISTO, Daniel, Aliso Viejo, 92656 (US); SRINIVASAN, Gajawalli V., South Windsor, 06074 (US); SMITH, Kenneth D., East Longmeadow, 01028 (US)
(74) Representative: Dehns

(57) **Abstract**

A process for fabricating a melt-infiltrated ceramic matrix composite comprising fabricating a ceramic fiber preform comprising a fiber, a fiber tow, or both; depositing a structural support material coating on the fiber, the fiber tow, or both to form a partially densified ceramic matrix composite comprising at least one pore, at least one porous network or both; depositing a fiber protection material coating on the fiber, the fiber tow, or both; infiltrating a slurry composition comprising a solvent into the pore, the porous network or both; drying the partially densified ceramic matrix composite to remove the solvent; depositing a sacrificial material coating on the fiber protection material coating; and, melt-infiltrating a molten infiltrant into the partially densified ceramic matrix composite to form a melt-infiltrated ceramic matrix composite.

## Description

### FIELD OF THE INVENTION

The subject matter disclosed herein relates to fabricating ceramic matrix composites and, in particular, to fabricating ceramic matrix composites using uniformly distributed materials.

### BACKGROUND OF THE INVENTION

When melt-infiltrating a partially densified ceramic matrix composite, a liquified molten infiltrant containing, e.g., silicon, traverses throughout the composite. The silicon of the melt infiltrant reacts with material deposited within the composite, e.g., carbon source materials like diamond, and forms reaction products, such as silicon carbide and/or silicides. However, the aforementioned reactions consume the silicon present and alters the molten infiltrants chemical composition. For example, as the silicon of a siliconbased molten infiltrant reacts with carbon and becomes consumed, the molten infiltrant becomes depleted in silicon and richer in its alloying element, e.g., hafnium. Now, when the molten infiltrant, such as Si-Hf, initially begins as, e.g., a eutectic composition, the melting point of Si-Hf will increase as silicon is depleted. Eventually, as more silicon is depleted, the melting point will increase to a temperature above the melt infiltration temperature and the alloy solidifies, and infiltration stops. As a result, porous regions will form within the ceramic matrix composite at locations furthest from the initial infiltration site such that only a partially melt-infiltrated ceramic matrix composite is fabricated.

Besides the partial melt-infiltration of the ceramic matrix composite, both the resultant alloy composition and reactant phase within the melt-infiltrated areas will be nonuniformly distributed. This will result in a non-uniform distribution of material properties. Non-uniform distribution of material properties may include solidification shrinkage/expansion, thermal expansion coefficient (CTE), thermal conductivity and elastic modulus. Solidification stresses may result from non-uniform solidification shrinkage/expansion, and/or thermal expansion coefficient (CTE) mis-match stress during cooling from fabrication temperatures and/or from thermal cycling during end use operation, which may result in micro-cracking. In addition, non-uniform thermal conductivity and elastic modulus within the material may increase the impact of solidification stress and CTE mismatch stress. These resultant microcracks can detrimentally impact various properties of a partially melt-infiltrated ceramic matrix composite. Those various properties include, for example, interlaminar shear, interlaminar tension, stress rupture life, and tensile proportional limit. The extent of the aforementioned phenomena are affected by the following: part size, part complexity, sacrificial materials, sacrificial material amount, alloy selection and infiltration temperature.

Consequently, there is a need for a fabrication technique incorporating various means to achieve the uniform distribution of material(s) and, in turn, the uniform properties throughout the resultant ceramic matrix composite without experiencing the drawbacks discussed above.

### SUMMARY OF THE INVENTION

The present disclosure is directed, in a first aspect, to a process for fabricating a melt-infiltrated ceramic matrix composite, comprising the steps of: fabricating a ceramic fiber preform comprising at least one fiber, at least one fiber tow, or at least one fiber and fiber tow; depositing at least one structural support material coating on the at least one fiber, the at least one fiber tow, or the at least one fiber and fiber tow to form a partially densified ceramic matrix composite comprising at least one pore, at least one porous network or at least one pore and porous network; depositing at least one fiber protection material coating on the at least one fiber, the at least one fiber tow, or the at least one fiber and fiber tow; infiltrating a slurry composition comprising a solvent into the at least one pore, the at least one porous network or both the at least one pore and the porous network; drying the partially densified ceramic matrix composite to remove the solvent; depositing at least one sacrificial material coating on the fiber protection material coating; and melt-infiltrating at least one molten infiltrant into the partially densified ceramic matrix composite to form a melt-infiltrated ceramic matrix composite.

In further examples of the present disclosure, including further examples of the above, the step of infiltrating further comprises infiltrating the slurry composition further comprising a binder and an ice crystal modifier.

In further examples of the present disclosure, including further examples of the above, the binder comprises one or more of the following: methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant, polyvinyl alcohol, and combinations thereof.

In further examples of the present disclosure, including further examples of the above, the drying further comprises freezing the partially densified ceramic matrix composite and sublimating a frozen slurry composition to remove the solvent and form at least one foam-like structure uniformly distributed within the partially densified ceramic matrix composite.

In further examples of the present disclosure, including further examples of the above, the process further comprises depositing the at least one sacrificial material coating on the at least one foam-like structure.

In further examples of the present disclosure, including further examples of the above, the process further comprises depositing at least one optional reaction control material on the at least one foam-like structure and optionally depositing at least one optional wetting layer coating on the at least one optional reaction control material.

In further examples of the present disclosure, including further examples of the above, at least one optional reaction control material or the fiber protection material or both the at least one optional reaction control material and the fiber protection material comprise one or more of the following: silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, pyrolytic carbon, graphite, diamond, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, borides, zirconium borides, hafnium borides, niobium borides, tantalum borides, vanadium borides, ytterbium borides, yttrium borides, and combinations thereof.

In further examples of the present disclosure, including further examples of the above, the at least one optional wetting layer coating comprises one or more of the following: silicon carbides, boron carbides, pyrolytic carbon, graphite, diamond, and combinations thereof.

In further examples of the present disclosure, including further examples of the above, the step of infiltrating further comprises infiltrating the slurry composition further comprising at least one particle.

In further examples of the present disclosure, including further examples of the above, at least one particle comprises one or more of the following materials: boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, graphite, carbon nanotubes, carbon nanofibers, diamond particles, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, zirconium borides, hafnium borides, niobium borides, tantalum borides, vanadium borides, ytterbium borides, yttrium borides, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, aluminum oxides, silicon oxides, tantalum oxides, boron oxides, hafnium oxides, zirconium oxides, ytterbium oxides, yttrium oxides, alkaline earth metal alumino silicates, boro-silicates, alkaline earth metal alumino silicates, rare earth alumino silicates, zirconium, hafnium, tantalum, niobium, titanium, molybdenum, tungsten, vanadium, chromium, ytterbium, yttrium, silicon, boron, alloys thereof, and combinations thereof.

In further examples of the present disclosure, including further examples of the above, the process further comprises depositing the at least one sacrificial material coating on the at least one particle.

In further examples of the present disclosure, including further examples of the above, the step of drying further comprises thermally drying the partially densified ceramic matrix composite and removing the solvent to form at least one particle uniformly distributed within the partially densified ceramic matrix composite.

In further examples of the present disclosure, including further examples of the above, the step of melt-infiltrating further comprises the following steps: reacting the at least one molten infiltrant with an optional at least one wetting layer coating; diffusing the at least one molten infiltrant through at least one optional reaction control material coating and reacting with any one or more of the following: a sacrificial material coating, a particle, and a foam-like structure; and reacting the at least one molten infiltrant with the any one or more of the following: the sacrificial material coating, the particle, and the foam-like structure; until a matrix comprising a reaction formed silicon carbide and a high melting point silicide is produced.

In further examples of the present disclosure, including further examples of the above, the reaction formed silicon carbide comprises a reaction formed silicon carbide particle or a reaction formed silicon carbide coating layer or both the reaction formed silicon carbide particle and the reaction formed silicon carbide coating layer.

In further examples of the present disclosure, including further examples of the above, the sacrificial material coating comprises one or more of the following materials: boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, pyrolytic carbon, graphite, diamond, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, zirconium borides, hafnium borides, niobium borides, tantalum borides, vanadium borides, ytterbium borides, yttrium borides, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, aluminum oxides, silicon oxides, tantalum oxides, boron oxides, hafnium oxides, zirconium oxides, ytterbium oxides, yttrium oxides, zirconium, hafnium, tantalum, niobium, titanium, molybdenum, tungsten, vanadium, chromium, ytterbium, yttrium, silicon, boron, and combinations thereof.

In further examples of the present disclosure, including further examples of the above, the step of depositing comprises one or more of the following techniques: chemical vapor infiltration (CVI), chemical vapor deposition (CVD), physical vapor deposition (PVD), atomic layer deposition (ALD), molecular-beam epitaxy, and combinations thereof.

In further examples of the present disclosure, including further examples of the above, the step of melt-infiltrating further comprises melt-infiltrating one or more of the following molten infiltrants: metals, metalloids, metal alloys, metalloid alloys, glasses, and combinations thereof.

In further examples of the present disclosure, including further examples of the above, the process further comprises one or more of the following steps: depositing at least one interface coating on the at least one fiber, the at least one fiber tow, or the at least one fiber and fiber tow; depositing at least one optional reaction control material coating on the sacrificial coating material; depositing at least one optional wetting layer coating on the at least one optional reaction control material coating; and heat treating the melt-infiltrated ceramic matrix composite.

In further examples of the present disclosure, including further examples of the above, the interface coating, the structural support material or both the interface coating and the structural support material comprises one or more of the following materials: carbides, carbon materials, nitrides, borides, and combinations thereof.

In another aspect, the present disclosure is directed to a melt-infiltrated ceramic matrix composite fabricated according to the steps of the first aspect, such that infiltrating further comprises infiltrating the slurry composition further comprising a binder and an ice crystal modifier; drying further comprises freezing the partially densified ceramic matrix composite and sublimating a frozen slurry composition to remove the solvent and form at least one foam-like structure uniformly distributed within the partially densified ceramic matrix composite; and depositing further comprises depositing at least one sacrificial material coating or at least one reaction control material or both at least one sacrificial material coating and at least one reaction control material on the at least one foam-like structure.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary process for fabricating a melt-infiltrated ceramic matrix composite utilizing particles and reaction control layers.

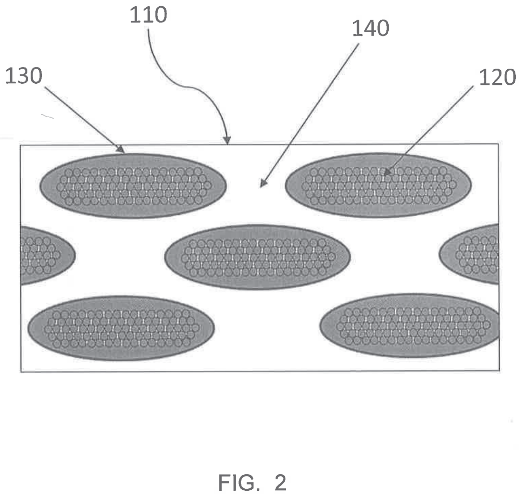

FIG. 2 is an illustration, not drawn to scale, of a cross-section of a partially densified ceramic matrix composite showing a network of pores containing fiber tows composed of fibers.
FIG. 3 is an illustration, not drawn to scale, of a cross-section of a slurry infiltrated partially densified ceramic matrix composite of FIG. 2 showing the pores filled with uniformly distributed particles.
FIG. 4 is an illustration, not drawn to scale, of a cross-section of the partially densified ceramic matrix composite of FIG. 3 showing the pores filled with uniformly distributed particles and deposited sacrificial material.
FIG. 5 is an illustration, not drawn to scale, of a cross-section of a melt-infiltrated partially densified ceramic matrix composite of FIG. 4 showing the pores filled with uniformly distributed particles and melt-infiltrant reaction product.
FIG. 6 is an illustration, not drawn to scale, of a cross-section of a slurry infiltrated partially densified ceramic matrix composite of FIG. 2 showing the pores filled with foam-like structures.
FIG. 7 is an illustration, not drawn to scale, of a cross-section of the slurry infiltrated partially densified ceramic matrix composite of FIG. 6 showing the pores filled with foam-like structures and deposited sacrificial material.
FIG. 8 is an illustration, not drawn to scale, of a cross-section of a melt-infiltrated partially densified ceramic matrix composite of FIG. 7 showing the pores filled with foam-like structures and melt-infiltrant reaction product.
FIG. 9 is a cross-sectional illustration of an exemplary slurry infiltrated partially densified ceramic matrix composite.
FIG. 10 is a cross-sectional illustration of an exemplary melt-infiltrated ceramic matrix composite.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to fabricating ceramic matrix composites using particles exhibiting a specified mode or modes of size or sizes in combination with various fabrication techniques. The size of the particles may be optimized for particle distribution, rather than particle loading, as a future deposition technique may supply any sacrificial material required to form the desired matrix chemistry within the resultant ceramic matrix composite. In the alternative, the ceramic matrix composites may also be fabricated using foam-like structures formed by a combination of slurry infiltration and freeze-drying technique(s). Without particles being present in the slurry, the slurry may easily penetrate the pores, porous network or both of the ceramic matrix composite. In turn, the freeze-drying technique may form the aforementioned foam-like structures uniformly distributed therein.

Those aforementioned techniques mentioned also include an exemplary reaction controlled melt-infiltration technique. Using temperature alone to limit the reaction rate and phase segregation during melt-infiltration is only partially effective to combat numerous potential drawbacks. Those drawbacks include a reduction in CMC-based part size; reduction in part geometry complexity; limited particle material selection and quantity; limited molten infiltrant selection and alloy composition; and, limited maximum melt-infiltration temperature. In contrast, the exemplary reaction controlled melt-infiltration technique disclosed herein utilizes exemplary reaction control layers. All the aforementioned drawbacks may be avoided by using the exemplary reaction control layers disclosed herein. In addition, the exemplary reaction control layers may produce ceramic matrix composites exhibiting and possessing a homogenous distribution of matrix phases resulting in uniform material properties, such as, but not limited to, coefficient of thermal expansion, thermal conductivity, solidification volumetric change, oxidation resistance and melting point. As result, the final ceramic matrix composite may have improved mechanical properties and high temperature capabilities compared to ceramic matrix composites fabricated without the exemplary reaction control layers disclosed herein.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

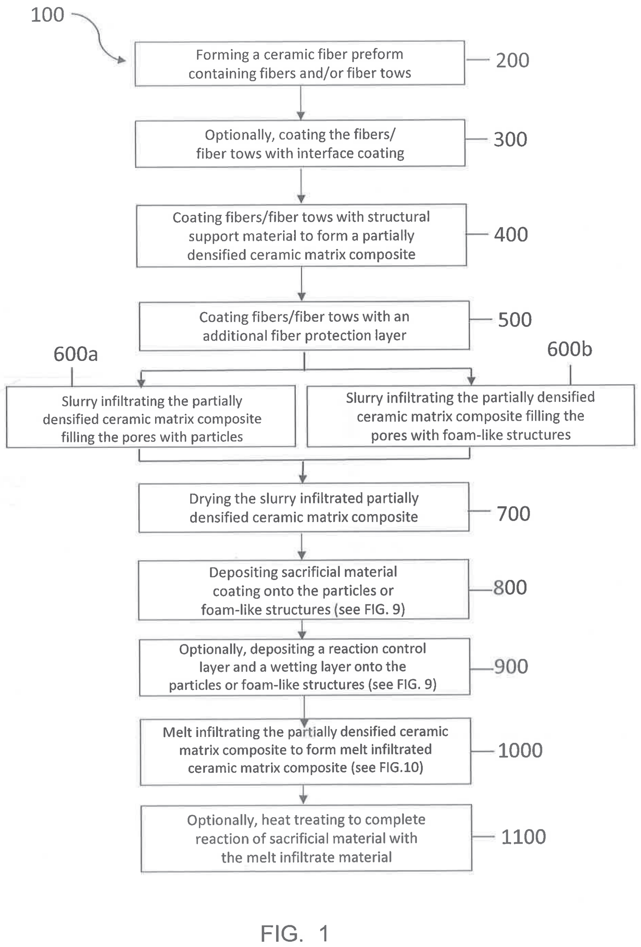

Referring now to FIG. 1, a flowchart 100 illustrating an exemplary process for fabricating a melt-infiltrated ceramic matrix composite utilizing reaction control layers is shown. At an exemplary step 200 of FIG. 1, a ceramic fiber preform 110 may be fabricated. At least one fiber 120, at least one fiber tow 130, or at least one fiber 120 and fiber tow 130 may be combined to fabricate the ceramic fiber preform using any suitable technique known. Suitable fibers for use as the fibers and/or fiber tows may include, but are not limited to, silicon carbide, carbon, aluminum oxide, silicon nitride, combinations thereof, and the like.

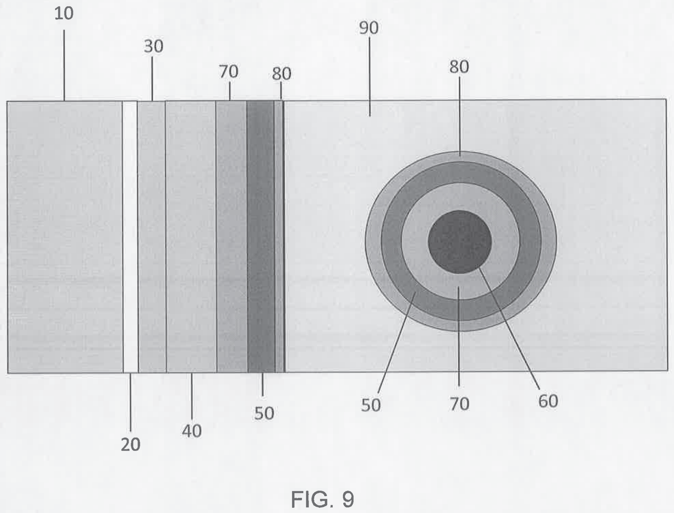

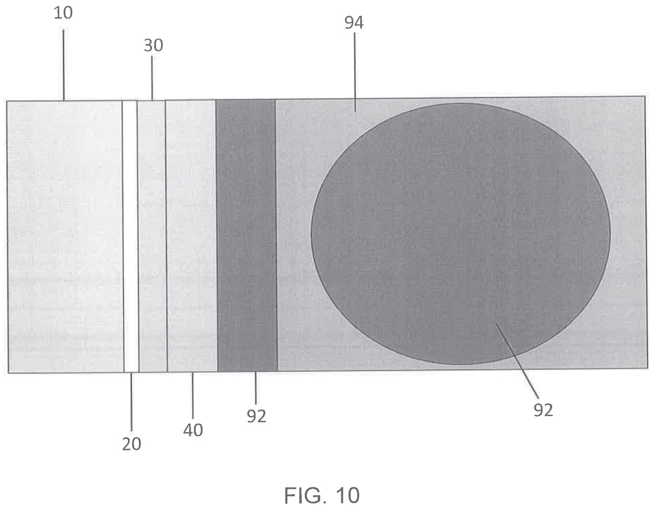

Next, at an exemplary step 300 of FIG. 1, an interface coating material 20 may optionally be disposed as a coating on the fiber(s) 10, fiber tow(s) 10, or both fiber(s) 10 and fiber tow(s) 10 of the ceramic fiber preform to fabricate a coated preform or coated substrate as an intermediate product (see FIGS. 9 and 10). Suitable interface coating materials may include, but are not limited to, carbides such as silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; carbon materials such as pyrolytic carbons, graphite and the like; nitrides such as silicon nitrides, titanium nitrides, boron nitrides, silicon doped boron nitride, zirconium nitrides, hafnium nitrides, niobium nitrides, tantalum nitrides, vanadium nitrides, ytterbium nitrides, yttrium nitrides, combinations thereof, and the like; borides such as silicon borides, titanium borides, zirconium borides, hafnium borides, niobium borides, tantalum borides, vanadium borides, ytterbium borides, yttrium borides, combinations thereof, and the like. The interface coating materials may be deposited using any suitable deposition technique. Suitable deposition techniques may include, but are not limited to, chemical vapor infiltration (CVI), chemical vapor deposition (CVD), physical vapor deposition (PVD), atomic layer deposition (ALD), molecular-beam epitaxy; individually, and combinations thereof, and the like.

Next, at an exemplary step 400 of FIG. 1, a structural support material 30 may be disposed as a coating on the fiber(s) 10, fiber tow(s) 10, or both fiber(s) 10 and fiber tow(s) 10 of the coated preform to fabricate a partially densified ceramic matrix composite as another intermediate product (see FIGS. 9 and 10). The resultant partially densified ceramic matrix composite may comprise at least one pore, at least one porous network, or at least one pore and porous network on at least an exterior surface(s), at least a series of interconnected pores, channels, combinations thereof, and the like therein; or both the exterior surface and the interconnected pores therein. Suitable structural support materials may include, but are not limited to, carbides such as silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; carbon materials such as pyrolytic carbons, graphite and the like; nitrides such as silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides such as silicon borides, titanium borides, zirconium borides, hafnium borides, niobium borides, tantalum borides, vanadium borides, ytterbium borides, yttrium borides, combinations thereof, and the like. The structural support materials may be deposited using any suitable deposition technique. Suitable deposition techniques may include, but are not limited to, chemical vapor infiltration (CVI), chemical vapor deposition (CVD), physical vapor deposition (PVD), atomic layer deposition (ALD), molecular-beam epitaxy, slurry infiltration; individually, and combinations thereof, and the like. When depositing the structural support materials, one or more layers containing a material listed above or similar material(s) listed above or a combination of materials listed above may be fabricated.

Next, at an exemplary step 500 of FIG. 1, an additional fiber protection material 40 may be disposed as a coating on the structural support material 30 on the fiber(s) 10, fiber tow(s) 10, or both fiber(s) 10 and fiber tow(s) 10 of the partially densified ceramic matrix composite (see FIGS. 9 and 10). The fiber protection coating material may be any material capable of protecting the partially densified CMC from a molten infiltrant during a melt-infiltration step performed later in the exemplary process disclosed herein. Suitable fiber protection coating materials may include, but are not limited to carbides, carbon materials, nitrides, borides, combinations thereof, and the like. Suitable carbides may include, but are not limited to, silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, combinations thereof, and the like. Suitable carbon materials may include, but are not limited to, pyrolytic carbon, graphite, diamond, combinations thereof, and the like. Suitable nitrides may include, but are not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like. Suitable borides may include, but are not limited to, silicon borides, titanium borides, borides, zirconium borides, hafnium borides, niobium borides, tantalum borides, vanadium borides, ytterbium borides, yttrium borides, combinations thereof, and the like. Deposition of the fiber protection coating materials may take place using any technique capable of depositing the material on and within the pores, porous network or both the pores and porous network of the partially densified CMC. Suitable fiber protection coating material techniques may include, but are not limited to, chemical vapor infiltration (CVI), chemical vapor deposition (CVD), physical vapor deposition (PVD), atomic layer deposition (ALD), molecular-beam epitaxy; individually, and combinations thereof, and the like.

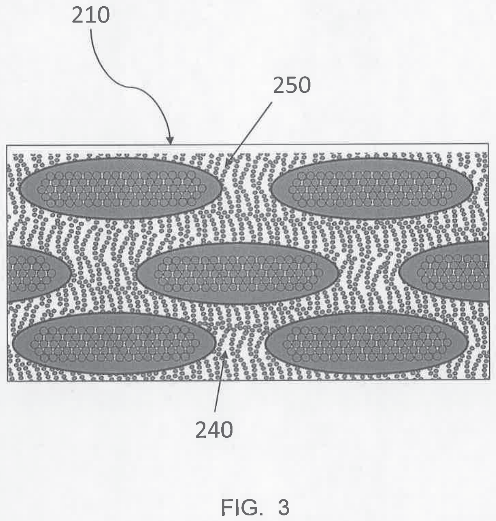

Next, at an exemplary step 600a of FIG. 1, a slurry containing a solvent, particles and various additives may be provided for infiltrating and filling the pore(s), porous network, or both the pore(s) and porous network of the partially densified ceramic matrix composite. Referring specifically to FIG. 3, the pores and/or porous network 240 of the slurry infiltrated partially densified ceramic matrix composite 210 may be filled substantially and/or entirely with the particles 250 (see FIG. 3). The particles 250 may exhibit and possess a particle size of approximately 1 nm to approximately 50 µm. As used herein, the term "particle size" refers to an average particle size, where average is equivalent to D50 or d₅₀ in particle size distribution. In at least one embodiment, more than one particle size may be utilized. For example, the particles may exhibit and possess a bimodal or multi-modal, e.g., trimodal, particle size distribution. In at least one embodiment, a bimodal particle size distribution may exhibit and possess a first average particle size range of up to approximately 4 µm and a second average particle size range of approximately 5 µm to approximately 20 µm. Whether a single particle size range or multiple particle size distribution is utilized, the particle size(s) may be selected to maximize their uniform distribution within and throughout the pores, porous network and both of the ceramic matrix composite.

In at least one embodiment, various additives may include, but are not limited to, binders, wetting agents, carbon sources, various particles (e.g., carbons, metals, carbides, nitrides, borides, oxides, combinations thereof, and the like), pH adjusters, dispersants, combinations thereof, and the like. Additives of any shape, e.g., particulate, flake or fiber; or size, e.g., nanometer, sub-micron, micron, combinations comprising any one of the foregoing, and the like; may be added to a slurry prior to slurry infiltration taking place. The aforementioned additives may be present in various concentrations, e.g., by weight percent, volume percent, and the like; based on the total amount of the slurry, and in various ratios with respect to each other, to optimize the efficiency of each slurry infiltration performed. For example, the binders may be selected and present in an amount suitable for impacting a viscosity of the slurry and ensuring uniform distribution of the particles.

Suitable particle for use herein may include, but is not limited to, carbon-based materials; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; graphite, e.g., flake, particle or fiber forms; carbon nanotubes, carbon nanofibers, diamond particles, combinations thereof, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides, including but not limited to, silicon borides, titanium borides, zirconium borides, hafnium borides, niobium borides, tantalum borides, vanadium borides, ytterbium borides, yttrium borides, combinations thereof, and the like; silicides including, but not limited to, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, combinations thereof, and the like; oxides, including but not limited to, aluminum oxides, silicon oxides, tantalum oxides, boron oxides, hafnium oxides, zirconium oxides, ytterbium oxides, yttrium oxides, combinations thereof, and the like; oxide phase precursors including, but not limited to, alkaline earth metal alumino silicates, boro-silicates (B₂O₃-SiO₂), alkaline earth metal alumino silicates, such as AEO-Al₂O₃-SiO₂, where AE = Be, Ca, Ba and Sr; rare earth alumino silicates, such as REO-Al₂O₃-SiO₂, where RE = La, Ce, Pr, Nd, Pm, Sm, Eu, Gd, Tb, Dy, Ho, Er, Tm, Yb, Lu and Y; combinations thereof, and the like; metals including, but not limited to, zirconium, hafnium, tantalum, niobium, titanium, molybdenum, tungsten, vanadium, chromium, ytterbium, yttrium, combinations thereof, and the like; metalloids including, but not limited to, silicon, boron, combinations thereof, and the like; alloys comprising any one or more of the aforementioned metal(s) and/or metalloid(s); as well as combinations thereof, and the like.

In at least one other embodiment, at an exemplary step 600b of FIG. 1, the slurry utilized may contain binder material(s), ice nucleators and ice crystal growth modifier(s) for use in freeze-drying techniques. In turn, the slurry infiltrated partially densified ceramic matrix composite may undergo a freeze-drying technique. In at least one other embodiment, the slurry utilized may be similar to the slurry utilized in carrying out step 600a, yet also may be used in freeze-drying techniques. For example, the aforementioned slurry may contain ice nucleators and ice crystal growth modifier(s) as well as various additives including, but not limited to, binders, wetting agents, carbon sources, various particles (e.g., carbons, metals, carbides, nitrides, borides, oxides, combinations thereof, and the like), pH adjusters, dispersants, combinations thereof, and the like, as described above.

The binder materials for use in freeze-drying may include any materials capable of forming a foam-like material when subjected to freeze-drying conditions and, in turn, forming the resultant foam-like structure. Suitable binder materials may include, but are not limited to, methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant, polyvinyl alcohol; combinations comprising any one of the foregoing, and the like.

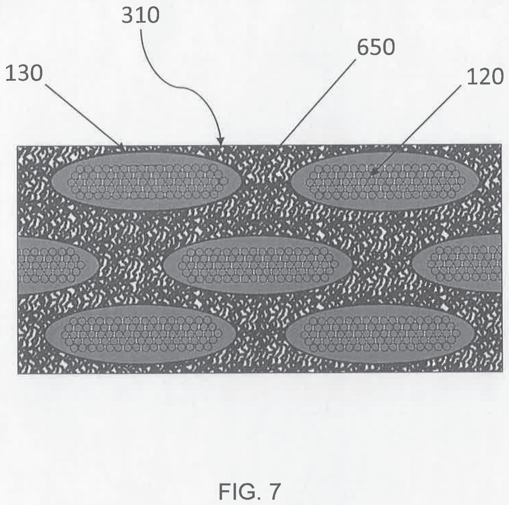

It has been discovered that when the slurry infiltrated partially densified ceramic matrix composite containing the binder is freeze dried, the binder forms a "foam-like" material. The resulting foam-like material uniformly fills the voids between the fibers, fiber tows and/or fiber bundles (see FIG. 10). If using heat to evaporate the solvent, the surface tension of the liquid slurry will cause the binder to form a coating on the surface of the fibers, fiber tows and/or fiber bundles instead of forming a foam-like structure in between the voids of the fibers, fiber tows and/or fiber bundles. As a result, the binder does not fill the voids between the fibers, fiber tows and/or fiber bundles and does not provide an adequate foam-like structure. In contrast, by using a freeze-drying technique, the foam-like structure within the slurry infiltrated partially densified ceramic matrix composite may be controlled, thereby also controlling the pore size and shape, within the ceramic matrix composite. Upon freeze-drying, the exemplary foam-like binder material, i.e., resultant exemplary structure, may be fabricated. As illustrated in Figure 7, the resultant exemplary partially densified ceramic matrix composite contains fiber bundles encapsulated within the exemplary frozen foam-like structure of the original binder material.

Any slurry infiltration technique may be utilized when carrying out the exemplary process disclosed herein. Suitable slurry infiltration techniques may include, but are not limited to, pressure infiltration, vacuum infiltration, submersion, spraying, dip coating, transfer molding, painting; individually, and combinations thereof, and the like. For example, the partially densified ceramic matrix composite may be disposed in a vacuum chamber and a vacuum applied. Next, a slurry may be introduced into the vacuum chamber. Due to the vacuum applied within the chamber, the slurry may be pulled into the pores and/or porous network of the partially densified ceramic matrix composite. In at least one other embodiment, a combination of methods may be utilized to deliver the slurry to the partially densified ceramic matrix composite in alternative steps or to different locations of the partially densified ceramic matrix composite. For example, the partially densified ceramic matrix composite may be disposed in a chamber having a vessel disposed therein. The vessel already may contain the slurry prior to or the vessel may be charged with the slurry afterwards. A pressure then may be applied such that the slurry, and its contents, may infiltrate the pores, porous network or both of the partially densified ceramic matrix composite.

In at least one embodiment, at an exemplary step 700 of FIG. 1, and following exemplary step 600a, the slurry infiltrated partially densified ceramic matrix composite may undergo thermal drying. Suitable thermal drying techniques may include, but are not limited to humidity controlled drying, microwave drying, convection drying; individually, and combinations thereof, and the like. In carrying out the technique, drying may be performed at a pressure of greater than 0 atm (0 kPa) and less than or equal to approximately 5 atm (507 kPa); a temperature of greater than 0°C and less than or equal to approximately 500°C; and, a humidity of greater than 0 RH and less than or equal to approximately 100% RH. In at least one embodiment, the slurry infiltrated partially densified ceramic matrix composite may be thermally dried until the solvent(s) is substantially removed and/ or entirely removed. Once removed, the pores, porous network or both of the partially densified ceramic matrix composite 210 may be filled with uniformly distributed particles 250.

In at least one other embodiment, at an exemplary step 700 of FIG. 1, and following exemplary step 600b, the slurry infiltrated partially densified ceramic matrix composite may undergo freeze-drying. Suitable freeze-drying techniques may include, but are not limited to, any technique capable of freezing the slurry, and its constituents, within and throughout the entirety of the preform. In at least one embodiment, the slurry infiltrated partially densified ceramic matrix composite may be placed in a pre-cooled freezer. To achieve the desired extent of freezing, freezing parameters may be monitored and modified as necessary. In at least one embodiment, the freezing parameters may include, but are not limited to, a temperature range of approximately -197°C to approximately 0°C; a pressure range of greater than 0 to approximately 100 atm (10.1 MPa); a freezing rate of approximately 200°C/sec to approximately 1°C/hr.; solidification direction, combinations thereof, and the like, to achieve the desired size of the ice crystals within the slurry infiltrated partially densified ceramic matrix composite. In at least one alternative embodiment, a super critical drying technique, rather than a freeze-drying technique, may be used to eliminate the liquid surface tension issue during drying. However, super critical drying techniques are more complex and expensive when compared to freeze drying techniques.

Once achieving the desired size of the ice crystals, a vacuum may be applied to begin sublimating the frozen slurry infiltrant within the partially densified ceramic matrix composite. Suitable sublimation techniques may include, but are not limited to, any technique capable of converting the solvent of the frozen slurry from a solid phase to a gaseous phase. The solidified solvent undergoes sublimation and may transition directly from a solid phase to a vapor phase without passing through a liquid phase. Sublimation may leave the remaining foam-like structures uniformly spaced, as the absence of liquid solvent may eliminate surface tension, which may otherwise cause particle agglomeration. Consequently, sublimation must be achieved to prevent clustering and porosity within the partially densified ceramic matrix composite.

After sublimation occurs, the sublimated frozen partially densified ceramic matrix composite may be placed in a drying oven. Any drying oven equipped with a moisture free container for holding the sublimated frozen partially densified ceramic matrix composite may be considered suitable for use herein. The drying oven may be operated at a temperature sufficient to drive off any residual moisture within the partially densified ceramic matrix composite. In at least one embodiment, a sufficient temperature range may be approximately 30°C to approximately 250°C. Once drying is completed, the frozen foam-like structures may be uniformly distributed within and throughout the pores and/or porous network between the fibers and/or fiber tows of the partially densified ceramic matrix composite.

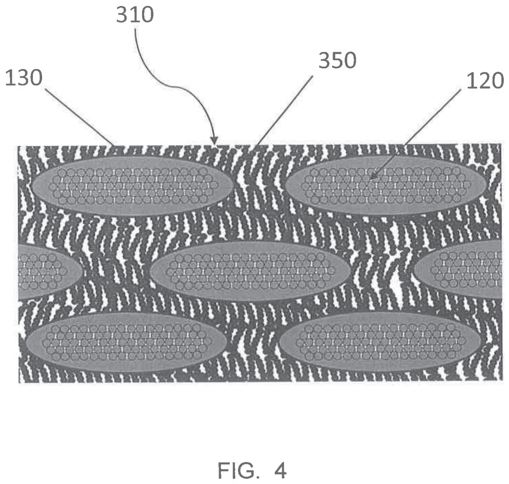

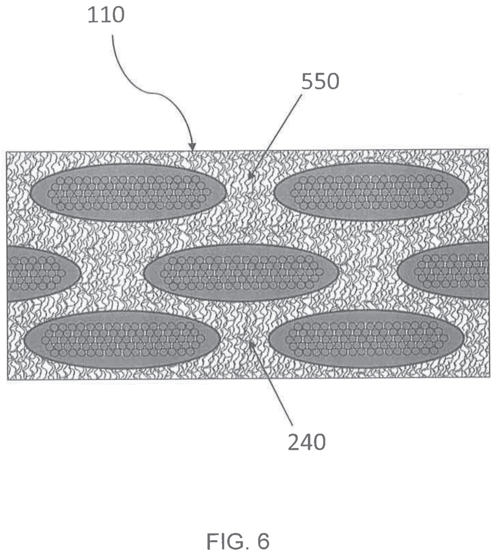

Next, at exemplary steps 800 and 900 of FIG. 1, at least one coating layer may be deposited on the particles 250 (see FIG. 3) or foam-like structures 550 (see FIG. 6), and the fiber protection material 40 (see FIG. 9) of the fibers 120 and/or the fiber tows 130 of the partially densified ceramic matrix composite 210 according to suitable deposition techniques to be discussed so that the coating layer material may effectively penetrate into the partially densified ceramic matrix composite 210. The resultant coated particles 350 or coated foam-like structures 650, and the fibers 120 and/or the fiber tows 130 uniformly distributed within a matrix 90 (see FIG. 9) in the partially densified ceramic matrix composite 310 may appear as illustrated in FIGS. 4 and 7. The matrix 90 may include, but is not limited to, silicides in general and, in particular, eutectic silicides; individually, and combinations thereof, and the like. Generally, the coating layer(s), and specifically the additional sacrificial material, reaction control and wetting layers discussed below, may be applied using any number of suitable vapor-based deposition techniques. Suitable vapor-based deposition techniques may include, but are not limited to, chemical vapor infiltration (CVI), chemical vapor deposition (CVD), physical vapor deposition (PVD), atomic layer deposition (ALD), molecular-beam epitaxy; individually, and combinations thereof, and the like.

Referring now to FIG. 9, the aforementioned coating layer(s) may comprise at least one sacrificial material coating 50, least one optional reaction control material 70, and at least one optional wetting layer 80. The sacrificial material coating layer 50 may be deposited on the surface of the particles 250/foam-like structure 550 or the surface of the fiber protection layer 40 of the partially densified ceramic matrix composite or the surfaces of both the particles 250/foam-like structure 550 and the fiber protection layer 40. The optional reaction control material layer 70 may be deposited on the sacrificial material coating layer 50 of the coated core particle 350/coated foam-like structure 650 or of the partially densified ceramic matrix composite or of both the coated particle 350/coated foam-like structure 650 and partially densified ceramic matrix composite. The optional wetting layer 80 may be applied to the reaction control material layer 70 of the coated particle 350/coated foam-like structure 650 or of the partially densified ceramic matrix composite or of both the coated particle 350/coated foam-like structure 650 and the partially densified ceramic matrix composite. In at least one embodiment, the optional wetting layer 80 also may be disposed as an additional coating (not shown) between the fiber protection layer 40 and optional reaction control material layer 70. The additional optional wetting layer material 80 may bond additional optional reaction control materials that otherwise may not be compatible with the fiber protection layer 40.

The optional reaction control layer 70 may be designed to delay the molten infiltrant material from reacting with the core of the coated particle until the molten material has completely penetrated, i.e., completely infiltrated, the partially densified ceramic matrix composite. By allowing the molten material to completely penetrate the partially densified ceramic matrix composite without reacting with the coated particle core material, the porosity and phase segregation issues described above may be avoided. After infiltration is completed, the temperature of the melt-infiltration process may be increased to allow for diffusion across the optional reaction control layer 70. Such diffusion may initiate a reaction between the coated sacrificial material and the molten infiltrant material. In at least one embodiment, the rate of diffusion, and hence the rate of reaction too, may be controlled by the material selection, layer thickness, grain structure, and grain orientation of the optional reaction control material layer 70.

In at least one embodiment, the optional reaction control material layer 70 may be fabricated using any number of the aforementioned suitable deposition techniques. In at least one embodiment, the optional reaction control material may include, but is not limited to, carbides, carbon materials, nitrides, borides, combinations thereof, and the like. Suitable carbides may include, but are not limited to, silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, combinations thereof, and the like. Suitable carbon materials may include, but are not limited to, pyrolytic carbon, graphite, diamond, combinations thereof, and the like. Suitable nitrides may include, but are not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like. Suitable borides may include, but are not limited to, silicon borides, titanium borides, borides, zirconium borides, hafnium borides, niobium borides, tantalum borides, vanadium borides, ytterbium borides, yttrium borides, combinations thereof, and the like.

Despite the similarities in constituents disclosed herein, the optional reaction control material layer 70 may be different from the fiber protection layer 40. More particularly, the optional reaction control material layer 70 may be engineered to have a diffusion rate sufficient to create a desired reaction rate with the sacrificial material coating layer 50. In contrast, the fiber protection layer 40 may be designed to prevent molten infiltrant materials from attacking the aforementioned fibers and/or fiber tows, interface coating, and structural support materials disclosed herein. By avoiding any reactions with the aforementioned fiber coating materials, potential detrimental reaction products and by-products that may negatively affect the mechanical properties of the resultant melt-infiltrated ceramic matrix composite may be avoided. Consequently, the fiber protection layer 40 and optional reaction control material layer 70 may comprise similar materials having different layer thicknesses, grain structures and/or grain orientations to facilitate the aforementioned desired properties and outcomes during use.

In at least one embodiment, the sacrificial material coating layer 50 may be fabricated such that the quantity deposited may produce the desired quantity of reaction formed product. The amount of particle materials 250 added during slurry infiltration may be limited as the sacrificial partial material 250 may cluster and clog pores if the quantity is overloaded, thus leading to non-uniform total sacrificial material distribution within the partially densified ceramic matrix composite. The vapor deposited sacrificial material coating layer 50 combined with the slurry infiltrated particle material 250 or foam-like structure 550 may increase the total amount of sacrificial material that may be loaded into the partially densified ceramic matrix composite, without adversely effecting sacrificial material distribution.

The sacrificial material coating layer 50 may be fabricated using any number of the aforementioned suitable deposition techniques. In at least one embodiment, the sacrificial material coating may include, but is not limited to, carbon-based materials; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; pyrolytic carbon, graphite diamond, combinations thereof, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides, including but not limited to, silicon borides, titanium borides, zirconium borides, hafnium borides, niobium borides, tantalum borides, vanadium borides, ytterbium borides, yttrium borides, combinations thereof, and the like; silicides including, but not limited to, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, combinations thereof, and the like; oxides, including but not limited to, aluminum oxides, silicon oxides, tantalum oxides, boron oxides, hafnium oxides, zirconium oxides, ytterbium oxides, yttrium oxides, combinations thereof, and the like; metals including, but not limited to, zirconium, hafnium, tantalum, niobium, titanium, molybdenum, tungsten, vanadium, chromium, ytterbium, yttrium, combinations thereof, and the like; metalloids including, but not limited to, silicon, boron, combinations thereof, and the like.

In at least one embodiment, the optional wetting layer 80 may be fabricated using any number of the aforementioned suitable deposition techniques. Suitable wetting layer materials may include, but are not limited to, carbides, carbon materials, combinations thereof, and the like. Suitable carbide materials may include, but are not limited to, silicon carbides, boron carbides, combinations thereof, and the like. Suitable carbon materials may include but are not limited to, pyrolytic carbon, diamond, graphite, graphite flakes, graphite particles, graphite fibers, carbon nanotubes, carbon nanofibers, combinations thereof, and the like.

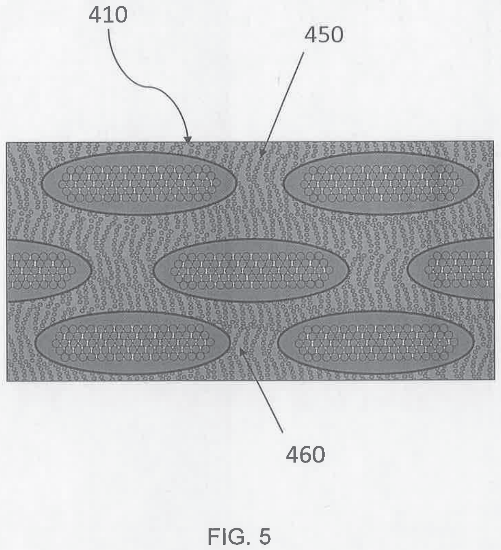

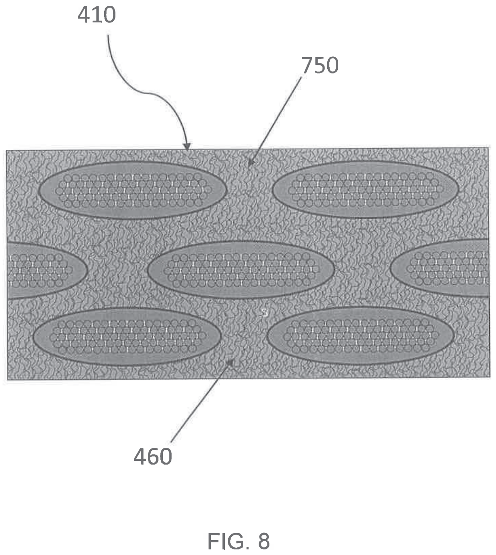

Next, at an exemplary step 1000 of FIG. 1, the partially densified ceramic matrix composite containing the coated particles 350 or coated foam-like structures 650 within the matrix 90 of the pores and/or porous network 140 may be melt-infiltrated with at least one molten infiltrant to fabricate a melt-infiltrated ceramic matrix composite 410 (see FIGS. 4 and 7). The resultant melt-infiltrated ceramic matrix composite 410 may include particles 450 or foam-like structures 750, which may remain unreacted or may have become reaction product(s), uniformly disposed within a matrix material 460, e.g., a meltinfiltrate reaction product (see FIGS. 5 and 8). In at least one embodiment, the molten infiltrant may include, but is not limited to metals, metalloids, metal alloys, metalloid alloys, glasses, combinations thereof, and the like. In particular, exemplary molten infiltrant materials may include, but are not limited to, zirconium, titanium, hafnium, tantalum, iridium, molybdenum, tungsten, boron, niobium, ytterbium, vanadium, scandium, yttrium, silicon, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, alumino-silicate glass; individually, and combinations thereof, and the like. Any suitable melt-infiltrating technique may be utilized when infiltrating the molten infiltrant as disclosed herein.

Referring now to FIG. 10, when carrying out the process, the molten infiltrant material may react with the optional wetting layer 80, if present, of the coated particle 350 or the coated foam-like structure 650 of both the coated particle 350 or the coated foam-like structure 650 of the partially densified ceramic matrix composite, until the optional wetting layer 80 is consumed. Once the optional wetting layer 80 is consumed, the molten infiltrate material may diffuse through the optional reaction control material layer 70 of the coated particle 60. Once the molten infiltrate material diffuses through the optional reaction control material layer 70, the molten infiltrate material may react with the sacrificial material coating layer 50 and produce a reaction product.

During that reaction, the reaction constituents may convert into a desired phase of a matrix comprising the reaction product. In at least one embodiment, the core particle 60 may be diamond, which after reacting with the melt-infiltrant, may convert to a reaction-formed silicon carbide. Due to the carbon density of diamond, the reaction-formed silicon carbide occupies a larger volume than the original diamond particle of the coated particle. That is, the reaction-formed silicon carbide may occupy a volume of at least approximately 1 times greater, of at least approximately 2 times greater, of at least approximately 3 times greater, and even of at least approximately 3.5 times greater than the volume of the original diamond particle. This difference in volume is due to the carbon of the diamond particle consuming the silicon present in the molten infiltrant material and forming the reaction-formed silicon carbide. In turn, the molten infiltrant may convert to a high melting point silicide matrix 94 contained within the pores, porous network, or both the pores and porous network of the partially densified ceramic matrix composite. In addition to the high melting point silicide matrix 94, the reaction product also may comprise a reaction-modified coated particle disposed therein and throughout the melt-infiltrated ceramic matrix composite. In at least one embodiment, through the aforementioned reaction(s), the core particle 60 and coating layer constituents 50, 70, 80 may transform into a reaction-modified particle comprising reaction-formed silicon carbide 92 disposed within the high melting point silicide matrix 94. In at least one other embodiment, through the aforementioned reaction(s), the coating layer constituents 50, 70, 80 of the partially densified ceramic matrix composite also may transform in to a reaction-modified layer comprising the reaction-formed silicon carbide 92 on the melt-infiltrated ceramic matrix composite.

At an exemplary step 1100 of FIG. 1, the resultant melt-infiltrated CMC optionally may be heat-treated to react the resultant reaction-modified coated particles or reaction-modified foam-like structures with the melt infiltrant as well as at least one or more metals, metal alloys, metalloids, metalloid alloys, glasses, aforementioned various particles, fiber protection coatings, combinations thereof, and the like, therein. Melt infiltration may be carried out at low temperatures and dwell times relative to heat treatment temperatures and dwell times in order to minimize the reaction of the molten materials and the sacrificial materials. If the aforementioned reaction is not minimized, unwanted material segregation or infiltration "choking off" may result. Suitable melt infiltration temperature range may be approximately 1,100°C to approximately 1,600°C. In correlation with the melt infiltration temperature range, suitable dwell time range may be approximately 1 minute to approximately 10 hours. In addition, suitable heat treatment temperature range may be approximately 1,400°C to approximately 2,000°C. In correlation with the heat treatment temperature range, suitable dwell times may be approximately 10 minutes to approximately 48 hours. The aforementioned heat treatment temperatures and hold times may be correlated and designed to achieve the desired amount of reaction between the molten material(s) and the sacrificial material(s). In most embodiments, the desired amount of reaction may be greater than approximately 95% of the total amount of sacrificial material(s) initially present.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A process for fabricating a melt-infiltrated ceramic matrix composite (410), comprising the steps of:
fabricating a ceramic fiber preform (110) comprising at least one fiber (10; 120), at least one fiber tow (10; 130), or at least one fiber (10; 120) and fiber tow (10; 130);
depositing at least one structural support material coating (30) on the at least one fiber (10; 120), the at least one fiber tow (10; 130), or the at least one fiber (10; 120) and fiber tow (10; 130) to form a partially densified ceramic matrix composite (210) comprising at least one pore, at least one porous network (140; 240) or at least one pore and porous network (140; 240);
depositing at least one fiber protection material coating (40) on the at least one fiber (10; 120), the at least one fiber tow (10; 130), or the at least one fiber (10; 120) and fiber tow (10; 130);
infiltrating a slurry composition comprising a solvent into the at least one pore, the at least one porous network (140; 240) or both the at least one pore and the porous network (140; 240);
drying the partially densified ceramic matrix composite (210) to remove the solvent;
depositing at least one sacrificial material coating (50) on the fiber protection material coating (40); and
melt-infiltrating at least one molten infiltrant into the partially densified ceramic matrix composite (210) to form a melt-infiltrated ceramic matrix composite (410).

2. The process of claim 1, wherein infiltrating further comprises infiltrating the slurry composition further comprising a binder and an ice crystal modifier.

3. The process of claim 2, wherein the binder comprises one or more of the following: methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant, polyvinyl alcohol, and combinations thereof.

4. The process of claim 3, wherein drying further comprises freezing the partially densified ceramic matrix composite (210) and sublimating a frozen slurry composition to remove the solvent and form at least one foam-like structure (550; 650; 750) uniformly distributed within the partially densified ceramic matrix composite (210).

5. The process of claim 4, further comprising depositing the at least one sacrificial material coating (50) on the at least one foam-like structure (550; 650; 750).

6. The process of claim 5, further comprising depositing at least one optional reaction control material (70) on the at least one foam-like structure (550; 650; 750) and optionally depositing at least one optional wetting layer coating (80) on the at least one optional reaction control material (70),
optionally wherein at least one optional reaction control material (70) or the fiber protection material (40) or both the at least one optional reaction control material (70) and the fiber protection material (40) comprise one or more of the following: silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, pyrolytic carbon, graphite, diamond, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, borides, zirconium borides, hafnium borides, niobium borides, tantalum borides, vanadium borides, ytterbium borides, yttrium borides, and combinations thereof.

7. The process of claim 6, wherein at least one optional wetting layer coating (80) comprises one or more of the following: silicon carbides, boron carbides, pyrolytic carbon, graphite, diamond, and combinations thereof.

8. The process of claim 1, wherein infiltrating further comprises infiltrating the slurry composition further comprising at least one particle (250; 450),
optionally, wherein the at least one particle (250; 450) comprises one or more of the following materials: boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, graphite, carbon nanotubes, carbon nanofibers, diamond particles, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, zirconium borides, hafnium borides, niobium borides, tantalum borides, vanadium borides, ytterbium borides, yttrium borides, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, aluminum oxides, silicon oxides, tantalum oxides, boron oxides, hafnium oxides, zirconium oxides, ytterbium oxides, yttrium oxides, alkaline earth metal alumino silicates, boro-silicates, alkaline earth metal alumino silicates, rare earth alumino silicates, zirconium, hafnium, tantalum, niobium, titanium, molybdenum, tungsten, vanadium, chromium, ytterbium, yttrium, silicon, boron, alloys thereof, and combinations thereof.

9. The process of claim 8, further comprising depositing the at least one sacrificial material coating (50) on the at least one particle (250; 450),
optionally, wherein drying further comprises thermally drying the partially densified ceramic matrix composite (210) and removing the solvent to form at least one particle (250; 450) uniformly distributed within the partially densified ceramic matrix composite (210).

10. The process of any preceding claim, wherein melt-infiltrating further comprises the following steps:
reacting the at least one molten infiltrant with an optional at least one wetting layer coating (80);
diffusing the at least one molten infiltrant through at least one optional reaction control material coating (70) and reacting with any one or more of the following: a sacrificial material coating (50), a particle (250; 450), and a foam-like structure (550; 650; 750); and
reacting the at least one molten infiltrant with the any one or more of the following: the sacrificial material coating (50), the particle (250; 450), and the foam-like structure (550; 650; 750); until a matrix (90; 94; 460) comprising a reaction formed silicon carbide (92) and a high melting point silicide (94) is produced,
optionally, wherein the reaction formed silicon carbide (92) comprises a reaction formed silicon carbide particle (92) or a reaction formed silicon carbide coating layer (92) or both the reaction formed silicon carbide particle (92) and the reaction formed silicon carbide coating layer (92).

11. The process of any preceding claim, wherein the sacrificial material coating (50) comprises one or more of the following materials: boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, pyrolytic carbon, graphite, diamond, silicon nitrides, titanium nitrides, boron nitrides, zirconium nitrides, hafnium nitrides, niobium nitrides, tantalum nitrides, vanadium nitrides, ytterbium nitrides, yttrium nitrides, silicon borides, titanium borides, zirconium borides, hafnium borides, niobium borides, tantalum borides, vanadium borides, ytterbium borides, yttrium borides, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, aluminum oxides, silicon oxides, tantalum oxides, boron oxides, hafnium oxides, zirconium oxides, ytterbium oxides, yttrium oxides, zirconium, hafnium, tantalum, niobium, titanium, molybdenum, tungsten, vanadium, chromium, ytterbium, yttrium, silicon, boron, and combinations thereof.

12. The process of any preceding claim, wherein depositing comprises one or more of the following techniques: chemical vapor infiltration (CVI), chemical vapor deposition (CVD), physical vapor deposition (PVD), atomic layer deposition (ALD), molecular-beam epitaxy, and combinations thereof.

13. The process of any preceding claim, wherein melt-infiltrating further comprises melt-infiltrating one or more of the following molten infiltrants: metals, metalloids, metal alloys, metalloid alloys, glasses, and combinations thereof.

14. The process of any preceding claim, further comprising one or more of the following steps:
depositing at least one interface coating (20) on the at least one fiber (10; 120), the at least one fiber tow (10; 130), or the at least one fiber (10; 120) and fiber tow (10; 130);
depositing at least one optional reaction control material coating (70) on the sacrificial coating material (50);
depositing at least one optional wetting layer coating (80) on the at least one optional reaction control material coating (70); and
heat treating the melt-infiltrated ceramic matrix composite (410),
optionally wherein the interface coating (20), the structural support material (30) or both the interface coating (20) and the structural support material (30) comprises one or more of the following materials: carbides, carbon materials, nitrides, borides, and combinations thereof.

15. A melt-infiltrated ceramic matrix composite (410) fabricated according to the steps of any preceding claim, wherein:
infiltrating further comprises infiltrating the slurry composition further comprising a binder and an ice crystal modifier;
drying further comprises freezing the partially densified ceramic matrix composite (210) and sublimating a frozen slurry composition to remove the solvent and form at least one foam-like structure (550; 650; 750) uniformly distributed within the partially densified ceramic matrix composite (210); and
depositing further comprises depositing at least one sacrificial material coating (50) or at least one reaction control material (70) or both at least one sacrificial material coating (50) and at least one reaction control material (70) on the at least one foam-like structure (550; 650; 750).
